Europäisches Patentamt

European Patent Office

Office européen des brevets

(19)

(11) Numéro de publication : **0 046 104**
**B1**

(12) **FASCICULE DE BREVET EUROPÉEN**

(45) Date de publication du fascicule du brevet :
30.01.85

(51) Int. Cl.⁴ : **G 11 B 7/00**, G 11 B 7/24,
**B 41 M 5/26**, B 41 M 5/24

(21) Numéro de dépôt : **81401208.4**

(22) Date de dépôt : **28.07.81**

(54) **Procédé thermo-optique d'inscription d'information, support d'information destiné à la mise en œuvre de ce procédé et dispositif de lecture de ce support d'information.**

(30) Priorité : **13.08.80 FR 8017845**

(43) Date de publication de la demande :
**17.02.82 Bulletin 82/07**

(45) Mention de la délivrance du brevet :
**30.01.85 Bulletin 85/05**

(84) Etats contractants désignés :
**DE GB IT NL SE**

(56) Documents cités :
**EP-A- 0 015 141**
**EP-A- 0 019 329**
**EP-A- 0 022 313**
**DE-A- 2 546 941**
**DE-B- 2 701 218**
**FR-A- 1 593 710**
**FR-A- 2 385 535**
**FR-A- 2 435 779**
**GB-A- 2 061 594**
**GB-A- 2 061 595**
**IBM TECHNICAL DISCLOSURE BULLETIN, vol. 16, no. 2, juillet 1973, New York, US R.J. VON GUTFELD: "Layered structure for decreasing laser energy for beam-addressable memory" pages 498-499**

(73) Titulaire : **THOMSON-CSF**
**173, Boulevard Haussmann**
**F-75379 Paris Cedex 08 (FR)**

(72) Inventeur : **Cornet, Jean**
**THOMSON-CSF SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Jouve, 18, rue St-Denis, 75001 Paris, France

**Description**

L'invention se rapporte à l'enregistrement d'information selon une piste portée par un support. Elle vise plus particulièrement un procédé thermo-optique qui consiste à focaliser sur le support un rayonnement optique modulé par l'information. L'énergie contenue dans ce rayonnement est convertie en chaleur. L'élévation de température transitoire crée le long de la piste une modification permanente des caractéristiques du support susceptible d'être lue optiquement, sans qu'il soit nécessaire d'appliquer au support un traitement chimique assurant le développement d'une image latente. Un tel procédé d'inscription mettant en œuvre un film de chalcogénure à l'état cristallin est décrit dans le document IBM Technical Disclosure Bulletin, volume 16, N° 2, Juillet 1973, (New York) qui mentionne aux pages 498-499 un article de R.J. Von Gutfeld intitulé : « Layered Structure for Decreasing Laser Energy for Beam-Adressable Memory ». La modification physique du support obtenue peut consister en une empreinte en creux ou en saillie. L'empreinte laissée sur le support après le passage du rayonnement inscripteur dépend de la puissance incidente, de la vitesse d'exploration du support et du pouvoir absorbant de la surface qui reçoit le rayonnement. Il en résulte en pratique que le contrôle dimensionnel de l'empreinte est une opération délicate nécessitant beaucoup de précautions.

Dans le cas des inscriptions thermo-optiques obtenues avec enlèvement de matière, on peut utiliser une couche absorbante recouvrant une couche totalement réfléchissante. L'épaisseur de la couche absorbante est choisie de façon à minimiser la réflexion du rayonnement incident. Ceci a pour avantage d'améliorer le contraste de lecture entre les zones qui ont subi une ablation thermique et celles qui sont restées intactes ; accessoirement, l'ablation nécessite une énergie moins importante puisque la réflexion est plus faible.

L'inscription thermo-optique par ablation d'une couche absorbante aboutit à la formation d'un cratère entouré d'un bourrelet. Les documents EP-A-19 329 (Philips), EP-A-15 141 (Discovision), et FR-A-2 385 535 (RCA) décrivent des procédés d'inscription thermo-optique par ablation mettant en œuvre le principe de cavités optiques à antiréflexion en vue d'obtenir un bon contraste de lecture. Une telle configuration d'empreinte exige un dosage précis de l'énergie d'inscription pour maintenir au cours de la lecture de l'empreinte un rapport signal à bruit satisfaisant. Comme la formation de l'empreinte découle d'un phénomène de dégradation dont l'apparition est postérieure à l'accumulation de chaleur qui fait franchir le seuil de gravure, il faut surveiller le déroulement de la gravure par ablation et faire en sorte que la puissance du faisceau inscripteur soit adaptée à l'effet désiré. Il est connu du document EP-A-22 313 (Discovision) de créer thermo-optiquement une bosse à la surface d'une couche organique en réponse à une explosion partielle. Cette couche portée par un support réflecteur peut être revêtue d'un dépôt métallique afin de constituer une cavité optique accordée principalement à la longueur d'onde du rayonnement de lecture. Les trois demandes EP sont citées au titre de l'article 54 (3) CBE.

Il existe également une autre technique d'inscription thermo-optique qui consiste à faire naître une déformation plastique dans une couche de métal ductile en jouant sur une tension mécanique induite localement par élévation de température d'une sous-couche organique présentant des propriétés thermodéformantes. L'allongement permanent de la couche ductile subsiste après le passage du faisceau inscripteur. L'empreinte obtenue par cette technique se présente sous la forme d'un plissement plus ou moins accusé de la couche métallique, mais sans qu'aucun perçage ou bourrelet ne se forme. La régularité d'une telle empreinte favorise à la lecture l'obtention d'un bon rapport signal à bruit.

Néanmoins, si la puissance du faisceau inscripteur devient trop forte, ou si la réflectivité du support manque d'uniformité, on peut dépasser la charge de rupture, ce qui se traduit par un fissurage ou une destruction de la couche métallique ductile.

La rétention d'information par déformation plastique d'une couche ductile soumise à étirement est un processus nettement plus progressif que l'ablation, car la déformation évolue au fur et à mesure de l'apport de chaleur réalisé par l'irradiation optique du support d'information. On peut mettre à profit cette progressivité pour améliorer la latitude de pose d'un support d'information à couche ductile. En effet, au lieu de réguler la puissance du faisceau inscripteur, on peut faire en sorte que le rendement de conversion thermo-optique aille en décroissant lorsque la structure du support d'information est le siège d'une déformation induite. Le support d'information permettant d'exploiter l'effet d'autorégulation à l'inscription qui vient d'être évoqué possède une structure qui s'apparente à celle des lames à faces parallèles semi-argentées dont l'étude conduit à la réalisation des filtres interférentiels.

L'invention a pour objet un procédé thermo-optique d'inscription d'information sur un support comprenant une couche métallique ductile associée à une couche contiguë de substance organique thermo-déformante ; l'inscription mettant en œuvre un rayonnement de longueur d'onde prédéterminée échauffant en son point de convergence ladite couche métallique ductile, qui communique sa chaleur à la substance organique, dont la déformation thermique locale entraîne une déformation plastique de la couche métallique ductile, mais sans rupture de celle-ci, caractérisé en ce que, ladite couche métallique ductile étant partiellement perméable audit rayonnement, il consiste à munir le support d'information d'une couche métallique réfléchissante formant avec la couche métallique ductile une cavité optique à faces parallèles et à accorder initialement avant inscription l'épaisseur de ladite cavité optique aux environs d'un multiple impair du quart de la longueur d'onde du rayonnement d'inscription de façon que

**0 046 104**

la réflexion dudit rayonnement optique par ledit support augmente avec la déformation plastique locale dans la couche métallique ductile lors de l'inscription.

L'invention a également pour objet un support d'information inscriptible au moyen d'un rayonnement optique de longueur d'onde prédéterminée ; ledit support comprenant une couche métallique ductile associée à une couche contiguë de substance organique thermodéformante, ladite couche métallique ductile s'échauffant au point de convergence dudit rayonnement et communiquant sa chaleur à la substance organique, dont la déformation thermique locale entraîne une déformation plastique de la couche métallique ductile, mais sans rupture de celle-ci, caractérisé en ce que ladite couche métallique ductile est partiellement perméable audit rayonnement et qu'une couche métallique réfléchissante formant avec la couche métallique ductile une cavité optique à faces parallèles est accordée initialement avant inscription en épaisseur aux environs d'un multiple impair du quart de la longueur d'onde du rayonnement d'inscription de façon que le facteur de réflexion dudit support à ladite longueur d'onde augmente avec la déformation plastique locale dans la couche métallique ductile lors de son inscription.

L'invention sera mieux comprise au moyen de la description ci-après et des figures annexées parmi lesquelles :

la figure 1 représente en coupe une première variante de réalisation du support d'information conforme à l'invention ;

les figures 2 à 4 sont des figures explicatives du mode d'inscription du support illustré sur la figure 1 ;

la figure 5 représente en coupe une seconde variante de réalisation du support d'information selon l'invention ;

la figure 6 représente en coupe une troisième variante de réalisation du support d'information selon l'invention ;

la figure 7 représente en coupe une quatrième variante de réalisation du support d'information selon l'invention ;

la figure 8 représente en coupe une cinquième variante de réalisation du support d'information selon l'invention ;

la figure 9 représente en coupe une sixième variante de réalisation du support d'information selon l'invention ;

la figure 10 représente en coupe une septième variante de réalisation du support d'information selon l'invention ;

la figure 11 représente en coupe une huitième variante de réalisation du support d'information selon l'invention ;

la figure 12 représente en coupe une neuvième variante de réalisation du support d'information selon l'invention.

Comme mentionné ci-dessus, l'invention vise particulièrement un procédé d'inscription utilisant des lasers de faible puissance et ne nécessitant pas de régulation externe de la puissance du faisceau optique d'inscription en ce sens que la puissance absorbée est régulée automatiquement et en temps réel.

L'enregistrement thermo-optique d'information utilise généralement des lasers de puissance inférieure à 30 mW et il procède dans la plupart des cas, soit par ablation thermique, soit par défomation thermique d'une couche mince absorbant le rayonnement et déposée sur un substrat. La largeur et/ou l'amplitude de l'empreinte dépendent fortement de la puissance lumineuse et de la durée de l'impulsion lumineuse. D'autre part, dans le cas assez général d'inscription à travers le substrat, le faisceau laser peut rencontrer un certain nombre de « défauts » au cours de son trajet jusqu'à la couche sensible : poussières, traces de doigts, rayures du support et fluctuations d'épaisseur de celui-ci. Ces défauts modifient la puissance instantanée disponible pour l'inscription et il peut en résulter des sous-gravures ou des sur-gravures nuisibles à la restitution d'un signal de qualité. Enfin, si le support d'information a la forme d'un disque en rotation à vitesse angulaire constante, les informations sont stockées selon les spires d'une spirale ou selon un ensemble de cercles concentriques et la puissance nécessaire à la gravure dépend de la surface de cette gravure, c'est-à-dire aussi du rayon du cercle ou de la spirale de gravure. L'ensemble de ces facteurs rend nécessaire une régulation de puissance par exemple en comparant à chaque instant l'amplitude du signal obtenu à la lecture avec celle d'un signal de référence ce qui permet de réagir sur l'intensité du faisceau tombant sur la couche sensible. Cependant, ce genre de régulation ne peut intervenir en temps réel, c'est-à-dire qu'il n'est pas adapté à la présence de défauts locaux et aléatoires comme les rayures, poussières ou traces de doigts.

Dans les demandes de brevet EP-A-33 430 (THOMSON CSF) et EP-A-33 046 (THOMSON CSF), citées au titre de l'article 54 (3) CBE, on a décrit des techniques d'enregistrement thermo-optique mettant en œuvre une couche métallique ductile communiquant sa chaleur à une sous-couche de substance organique dotée de propriétés thermo-déformantes. Selon le cas, la substance organique peut être faite d'un matériau thermodilatable ou thermodégradable capable de déformer la couche métallique ductile. Au cours de l'inscription, la couche métallique ductile subit un étirement situé au-delà de la limite élastique et en-deça de l'allongement à la rupture, c'est-à-dire qu'elle se déforme sans qu'il y ait formation de trou. Les couches métalliques qui présentent ces caractéristiques sont constituées d'alliages entre un métal précieux comme l'or et un adjuvant comme Cu, Mn, Cr, Al ... conférant à l'alliage une excellente continuité, ductilité et résistance au choc.

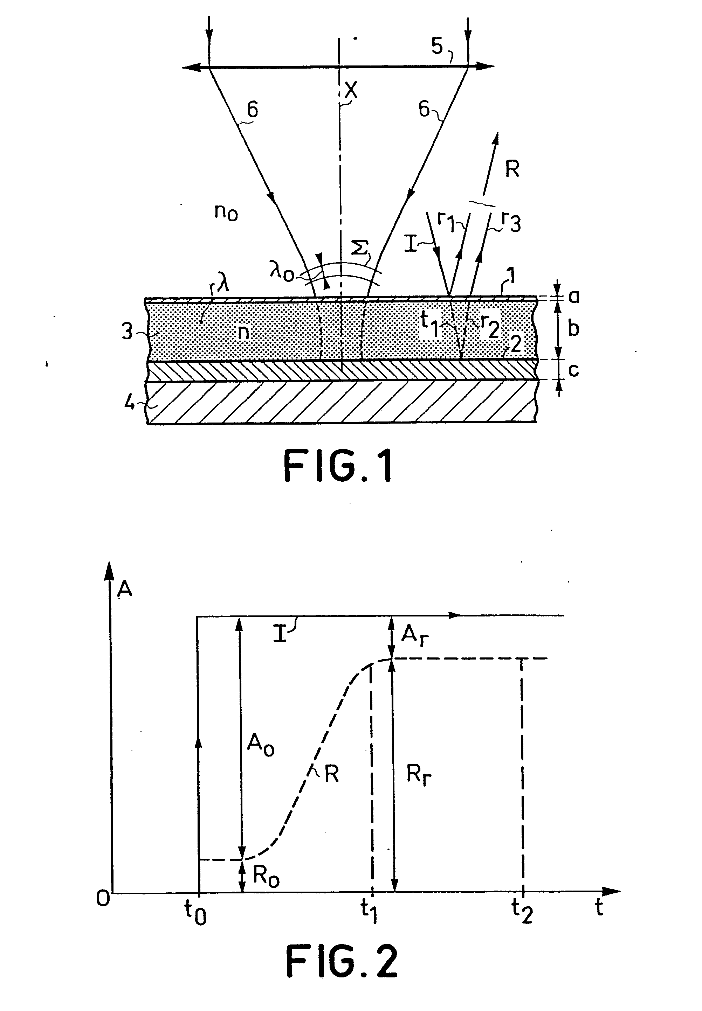

Sur la figure 1, on peut voir la coupe d'un support d'information conforme à l'invention. Il comprend

3

un substrat 4 revêtu d'une couche réfléchissante 2 d'épaisseur c. Au-dessus de la couche 2 est déposée une couche thermo-déformante 3 d'épaisseur b qui est composée d'un matériau polymère d'indice de réfraction n. La couche 3 est surmontée d'une couche métallique ductile 1 dont l'épaisseur a ne dépasse pas une vingtaine de nanomètres. Le rayonnement inscripteur 6 est focalisé sur la couche 1 par un objectif de projection 5 dont l'axe optique X est orienté suivant la normale. Les fronts d'ondes équiphases $\Sigma$ sont séparés d'une distance $\lambda_o$ dans le milieu ambiant d'indice $n_o$. La longueur d'onde du rayonnement inscripteur est donc $\lambda_o$ et elle se réduit à $\lambda$ dans la couche 3.

A l'inverse de la couche 2 qui est suffisamment épaisse pour ne pas transmettre de rayonnement et qui de ce fait, réfléchit le rayonnement incident sans absorption notable, la couche 1 est partiellement réfléchissante, partiellement absorbante et partiellement perméable au rayonnement inscripteur 6. L'épaisseur a de la couche métallique ductile 1 est donc choisie pour assurer cette triple fonction d'absorber, de réfléchir et de transmettre le rayonnement inscripteur 6.

Compte tenu de l'indice d'extinction $\chi$ des métaux, on voit que l'épaisseur a n'est qu'une toute petite fraction de la longueur d'onde $\lambda$. A titre indicatif, pour la lumière verte ($\lambda = 0,5$ micron) une couche d'or épaisse d'une longueur d'onde atténuerait $10^{10,5}$ fois l'intensité de cette lumière.

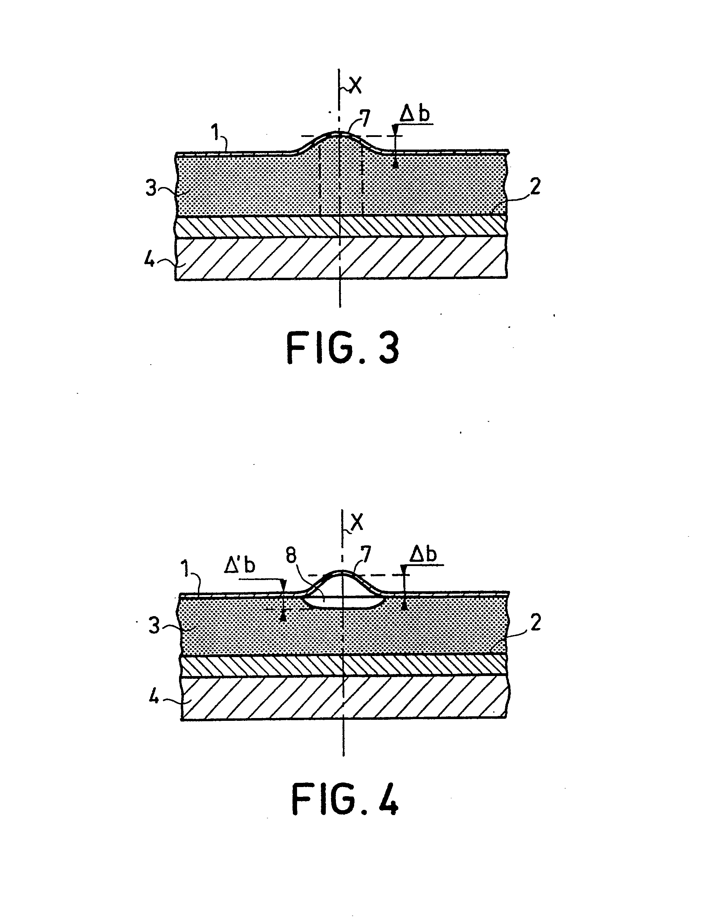

Sur la figure 1, le seul élément qui peut convertir en chaleur le rayonnement inscripteur 6 est la couche 1. L'élévation locale de température va se communiquer à la sous-couche 3 ce qui provoque une poussée sur la couche 1. Cette poussée a pour but d'étirer localement la couche 1 au-delà de la limite d'élasticité. La déformation plastique qui s'en suit laisse subsister après passage du faisceau inscripteur un plissement qui constitue l'empreinte permanente de l'information. La figure 3 montre une empreinte permanente 7 obtenue en utilisant comme sous-couche 3 un polymère thermodilatable. Ce polymère renferme un plastifiant qui confère à la couche 3 une forte expansion thermique et une aptitude à combler le plissement de la couche 1. La hauteur $\Delta b$ du plissement 7 peut atteindre une fraction de micron. La figure 4 montre une empreinte permanente 7 réalisée par thermodégradation de la couche 3. Dans ce cas, il se forme un creux de profondeur $\Delta'_b$ sous le plissement 7 de la couche 1. L'espace 8 entre ce creux et le plissement 7 renferme les résidus gazeux qui se sont formés par thermodégradation de la couche 3.

Sur les figures 1, 3 et 4 on a représenté les couches à une échelle fortement exagérée par rapport au substrat 4, afin de mieux mettre en évidence les changements stucturels se produisant dans la zone centrée autour de l'axe optique X du faisceau de rayonnement inscripteur. On peut constater que la cavité optique délimitée par les couches 1 et 2 se désaccorde lorsque l'empreinte de l'information se forme. Ce désaccord est mis à profit pour obtenir un effet d'autorégulation.

Comme la couche 1 transmet partiellement le rayonnement inscripteur, ses propriétés réfléchissantes dépendent fortement de la constitution des couches sous-jacentes et en particulier du régime d'interférence existant dans la cavité optique ayant pour longueur optique la valeur nb. Sur la figure 1 qui représente le support d'information vierge, on a représenté à droite du faisceau 6 le processus de réflexion multiple d'un rayon incident I. Le rayon I se réfléchit partiellement sur la couche 1 en donnant naissance à une composante réfléchie $r_1$. La fraction transmise $t_1$ du rayon I est réfléchie par la couche 2 sous la forme d'une composante $r_2$ qui après traversée de la couche 1 fournit une seconde composante réfléchie $r_3$. La composante $r_1$ et les composantes $r_3$ et suivantes forment une somme algébrique R qui est le rayonnement réfléchi résultant de l'ensemble de la structure. Le rapport R/I donne le facteur de réflexion du support d'information.

A titre d'exemple non limitatif, le support d'enregistrement est réalisé à partir d'un substrat 4 recouvert d'une couche 2 très réfléchissante pour la longueur d'onde $\lambda$ de la lumière utilisée pour la gravure, d'une couche 3 d'un matériau diélectrique transparent à la longueur d'onde $\lambda$ et d'une couche métallique ductile 1 absorbant le rayonnement et recouvrant la couche transparente 3. Afin que le couplage d'énergie dans le matériau absorbant 1 soit maximal, d'une part l'épaisseur c de la couche réfléchissante 2 est suffisante pour que la perte d'énergie par transmission soit nulle et d'autre part, l'épaisseur b de la couche diélectrique intermédiaire est voisine de $(2k+1)(\lambda/4n)$, c'est-à-dire d'un multiple impair du quart de la longueur d'onde de la lumière dans le matériau transparent d'indice n de façon à ce que, par interférences destructives, la lumière réfléchie globalement par la structure soit faible, typiquement comprise entre 10 et 20 %. Il en résulte que, la plus grande partie de l'énergie optique cédée par le faisceau inscripteur est concentrée dans la couche métallique absorbant le rayonnement, c'est-à-dire que la sensibilité est améliorée par rapport à la situation où le substrat ne présente pas de surface réfléchissante comme décrit dans les demandes de brevet EP-A-33 430 et EP-A-33 046.

Selon un aspect de la présente invention, le matériau thermodilatable ou thermodégradable est choisi de telle façon que la modification de son épaisseur b au cours du processus de déformation de la couche métallique ductile 1 sous l'impact du faisceau laser 6 soit voisine d'un quart de longueur d'onde de la lumière dans ce matériau transparent. Il en résulte que les conditions de quasi antiréflexion qui prévalaient avant l'inscription sont détruites c'est-à-dire que la réflectance de la structure augmente au fur et à mesure que la déformation s'amplifie dans la couche diélectrique. Dans le cas d'un laser hélium néon ($\lambda_o = 0,63$ $\mu$m), la réflectance de la structure est maximale et voisine de 70-80 % lorsque la déformation $\Delta b$ de la couche ductile est voisine de 100 nm. Parmi les couches dilatables, les couches plastifiées à base de nitrocellulose, décrites dans la demande de brevet EP-A-33 046 ont une dilatation thermique qui leur confère après inscription une déformation de cet ordre de grandeur. La modification du taux de plastifiant en plus ou en moins permet de détruire les conditions d'antiréflexion quelle que soit la longueur d'onde d'écriture pour laquelle on a réalisé l'accord de la cavité optique. En ce qui concerne les couches thermodéformables, on préférera parmi les polymères décrits dans la demande de brevet EP-A-33 430, les polymères à faible dureté comme PVC, poly-$\alpha$-méthylstyrène ... et on choisira une épaisseur de couche métallique 1 suffisamment élevée pour que le développement de la bulle gazeuse 8 sous l'impact du faisceau laser 6 donne lieu à la déformation désirée, c'est-à-dire celle conduisant à une destruction des conditions d'antiréflexion sous l'impact du faisceau laser.

Selon un second aspect de la présente invention, on peut aider la déformation du polymère qu'il soit dilatable ou thermodégradable en lui ajoutant un colorant ou un pigment sur tout ou partie de l'épaisseur de la couche de façon à ce qu'une partie du rayonnement soit absorbée par le polymère lui-même ce qui entraîne une augmentation de sa température sur un plus grand volume donc une déformation intéressant une épaisseur de polymère plus importante. Dans ce cas, les épaisseurs du polymère 3 et de la couche métallique ductile 1 ne sont plus exactement celles qui prévalaient avant l'incorporation du colorant ou du pigment, mais le processus reste le même. Parmi les colorants ou les pigments, on choisit ceux qui ont une absorption importante pour la lumière d'inscription par exemple la fluorescéine, le noir de Soudan ... si le laser d'écriture utilisé est le laser He-Ne. D'autre part, les chalcogénures vitreux en particulier les verres à base de sélénium et d'arsenic présentent non seulement une bonne durée de vie, mais aussi des propriétés de déformabilité intéressantes telles qu'un point de ramollissement à basse température ou une forte tension de vapeur. Ils sont en outre faiblement absorbants dans le rouge ou l'infra-rouge et peuvent donc être utilisés dans le cadre de cette invention.

Quelque soit le mode de réalisation de la présente invention, pourvu que les conditions d'antiréflexion soient réalisées avant inscription et que ces conditions d'antiréflexion soient détruites au cours de l'inscription, à la fin de la déformation de la couche diélectrique, c'est-à-dire avant la fin de la durée de l'impulsion, la puissance absorbée chute d'une valeur voisine de 60 % de sa valeur de départ.

Le processus auto-régulateur d'inscription peut mieux se comprendre au moyen du diagramme de la figure 2. Ce diagramme exprime en fonction du temps l'évolution de la puissance optique A et le partage de cette puissance.

A l'instant $t_o$, on applique au support d'information une puissance optique incidente représentée par l'échelon I en trait plein. A ce stade une faible fraction $R_o$ de cette puissance est réfléchie et la majeure partie $A_o$ contribue via la couche ductile 1 à échauffer la sous-couche 3 thermo-déformante. La déformation engendrée au cours de l'inscription fait évoluer le partage de puissance selon la courbe R en pointillé. A l'instant $t_1$, l'effet auto-régulateur est saturé car la puissance réfléchie atteint la valeur $R_r$ tandis que la puissance absorbée est tombée à la valeur $A_r$. La déformation n'évolue plus aux instants $t_2$ car l'échauffement résiduel est faible. Si la puissance du faisceau incident varie, l'effet de saturation se produit plus ou moins rapidement, mais dans tous les cas il augmente la latitude de pose du support d'information.

En ce qui concerne l'inscription d'un support d'information en forme de disque, si la puissance de gravure choisie au centre du disque est

$$P_{int} \left[ 1 + (\Delta P_r/P_{int}) + (\Delta P_d/P_{int}) \right]$$

où $P_{int}$ est la puissance nominale nécessaire pour réaliser une inscription optimale à l'intérieur du disque, $\Delta P_r$ est l'incrément de puissance nécessaire pour réaliser une inscription optimale à l'extérieur du disque et $\Delta P_d$ est l'atténuation maximale de puissance entraînée par tout défaut rencontré par le faisceau d'inscription avant son impact sur la couche sensible, la déformation se produira pendant une durée $\tau_1$ inférieure ou égale à la durée $\tau_2$ de l'impulsion lumineuse et aura au bout de $\tau_1$ une valeur bien définie et reproductible non seulement sur un rayon donné mais aussi quel que soit le rayon, même si un défaut local est venu amputer la puissance utilisable de la valeur $\Delta P_d$.

Dans cet exemple de réalisation de l'invention, on dépose sur un support transparent 4 en polyméthacrylate de méthyle (PMMA) de 1,5 nm d'épaisseur, une couche réfléchissante 2 d'aluminium de 100 nm d'épaisseur par évaporation sous vide, puis on dépose une couche 33 de poly-$\alpha$-méthyl styrène de 320 nm d'épaisseur à partir d'une solution à 40 g/l dans le butyle acétate centrifugée sur le substrat à la vitesse de 350 tours par minute. Enfin on dépose, de nouveau par évaporation sous vide, une couche 1 de 10 nm d'épaisseur d'un alliage de composition massique $Cr_{45} Au_{55}$ à la vitesse de 0,2 nm $\cdot$ s$^{-1}$. La réflectance de la structure pour un faisceau de longueur d'onde 0,63 $\mu$m se propageant dans l'air est voisine de 40 %. Une expérience d'inscription statique a montré que la sensibilité de la structure est 30 % supérieure à celle qui caractérise la monocouche déformable c'est-à-dire la structure sans couche d'aluminium réfléchissante. D'autre part, après inscription, la réflectance mesurée au milieu du spot d'inscription a été trouvée égale à 80 %. Une expérience d'inscription en dynamique a été réalisée à 1 500 tours/mn à l'aide d'un laser He-Ne de 15 mw de puissance de sortie et à l'aide d'un objectif d'ouverture numérique 0,33. La puissance optimale de gravure pour une fréquence de modulation de 5 MHz et un indice de modulation de 50 % a été trouvée égale à 5,5 mw sur le rayon R = 100 mm du disque et 6,6 mW sur le rayon R = 150 mm, ce qui représente une augmentation de 20 %. Par ailleurs il a été observé que les poussières présentes sur la couche entraînaient une chute de puissance disponible inférieure ou égale à 10 %. L'utilisation d'une puissance incidente égale à 5,5 (1 + 0,2 + 0,1) = 7,15 mw a conduit à une gravure présentant un contraste optimal à la lecture et parfaitement reproductible d'un spot gravé au suivant quel

**0 046 104**

que soit le rayon, c'est-à-dire aussi bien sur le rayon R = 100 mm que sur le rayon R = 150 mm.

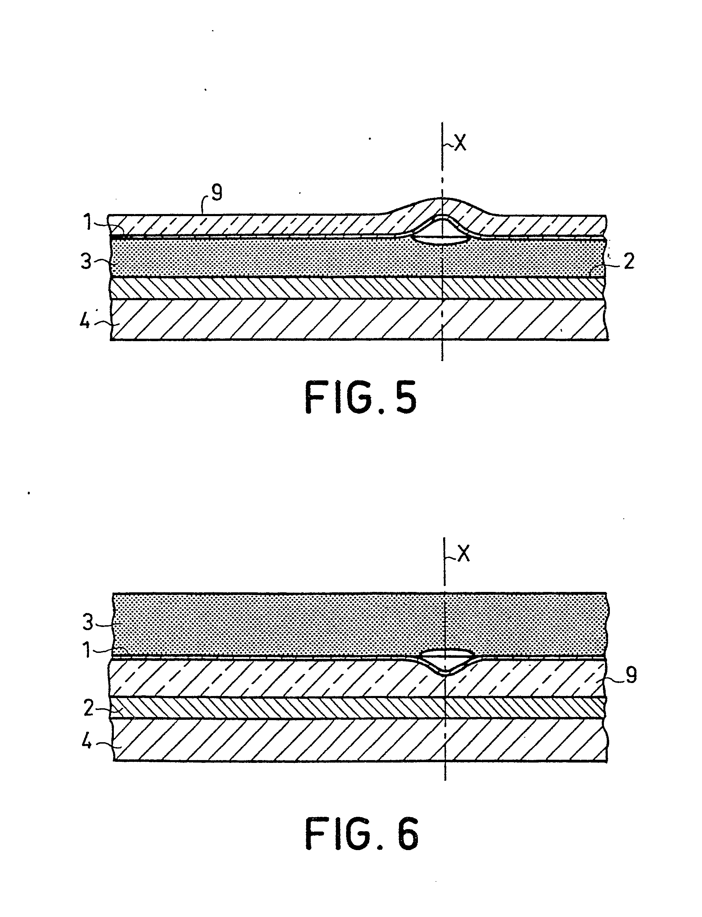

La figure 5 montre en coupe un support d'information dont la couche ductile 1 est recouverte par une couche protectrice 9 en matériau polymère transparent. Cette couche protectrice soustrait la couche ductile aux agressions chimiques et mécaniques extérieures. Le matériau de la couche 9 doit présenter une faible dureté de façon à ne pas gêner la déformation de la couche métallique ductile 1 sous l'impact du faisceau laser. A titre d'exemple non limitatif, ce dépôt de protection 9 peut être constitué par un silicone thermodurcissable du type « sylgard 184 » de la société Dow-Corning. Ce matériau peut être déposé en couche épaisse et uniforme par exemple par centrifugation. Il présente en outre l'intérêt d'être relativement peu adhérent à la structure à protéger si bien qu'il peut être facilement enlevé si nécessaire par exemple si une copie globale de l'information contenue dans la couche sensible est nécessaire.

Une autre caractéristique du revêtement protecteur 9 est de ne pas constituer une couche thermodéformante ayant les mêmes caractéristiques que la couche 3. Ceci dit, d'autres polymères peuvent également être utilisés par exemple les couches fortement plastifiées mentionnées dans la demande de brevet EP-A-33 046 ainsi que le polystyrène.

Sur la figure 6, les couches 3 et 9 sont interverties ce qui change le sens de la déformation de la couche ductile 1. La fonction protectrice est assurée par la couche thermodéformante 3 et la couche 9 a pour seule fonction de fixer l'épaisseur de la cavité optique délimitée par les couches 1 et 2. En conséquence, on voit que la nature du polymère utilisé pour la déformation de la couche métallique ductile et celle du matériau utilisé pour la protection de cette couche sont parfaitement interchangeables. La création dans la couche métallique ductile d'un relief positif ou négatif conduit en effet à un signal identique à la lecture. Cette propriété est intéressante dans la mesure où elle autorise, le cas échéant le dépôt de la couche réfléchissante, de la couche diélectrique avec conditions d'antiréflexion et de la couche absorbante à l'aide de la même technologie (évaporation par creuset, pulvérisation cathodique...) ce qui peut ne pas être le cas si c'est la couche thermodilatable ou thermodéformable qui est en sandwich entre la couche métallique réfléchissante et couche métallique ductile.

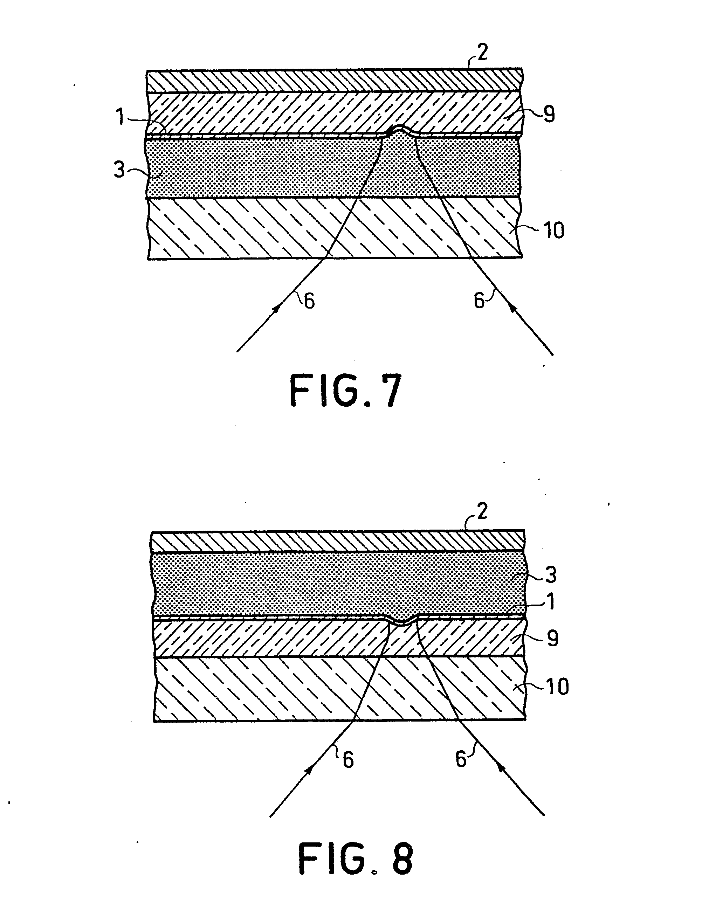

La présente invention n'est pas limitée au cas où le substrat 4 est réfléchissant ou au cas où il est revêtu d'une couche métallique 2 complètement réfléchissante. Une variante intéressante illustrée par la figure 7 est le cas où la structure est réalisée par dépôt successif sur un substrat 10 de la couche de polymère thermodéformante 3, de la couche métallique ductile 1 puis d'une couche diélectrique à faible dureté 9 d'épaisseur adaptée pour obtenir des conditions d'antiréflexion et enfin de la couche métallique fortement réfléchissante 2. Dans ce cas, l'inscription se fait à travers le substrat transparent 10 mais le comportement de la structure est analogue à celui décrit précédemment. Seules les épaisseurs de la couche diélectrique 9 et de la couche métallique ductile 1 doivent être adaptées pour tenir compte de la réflexion globalement plus faible de la couche métallique ductile en présence de la couche 3. D'autre part, ici encore la couche polymère thermodéformante 3 peut être intervertie avec la couche diélectrique 9 de faible dureté, ce qui change le sens de la déformation dans la couche métallique ductile mais n'affecte par le signal utilisable. Cette variante de réalisation est représentée en coupe sur la figure 8.

Au lieu d'utiliser une couche de protection solide, on peut protéger la gravure au moyen d'un capot protecteur. Ce capot sera transparent au rayonnement de lecture dans le cas de la figure 1, mais il peut être opaque si le substrat 4 est transparent comme le montrent les figures 7 et 8.

Jusqu'ici l'effet autorégulateur de l'inscription thermo-optique est obtenu avec une seule couche métallique ductile 1 placée en vis-à-vis d'une couche réfléchissante 2.

Sans s'écarter du domaine de la présente invention, on peut également intercaler une seconde couche métallique ductile partiellement perméable au rayonnement d'inscription.

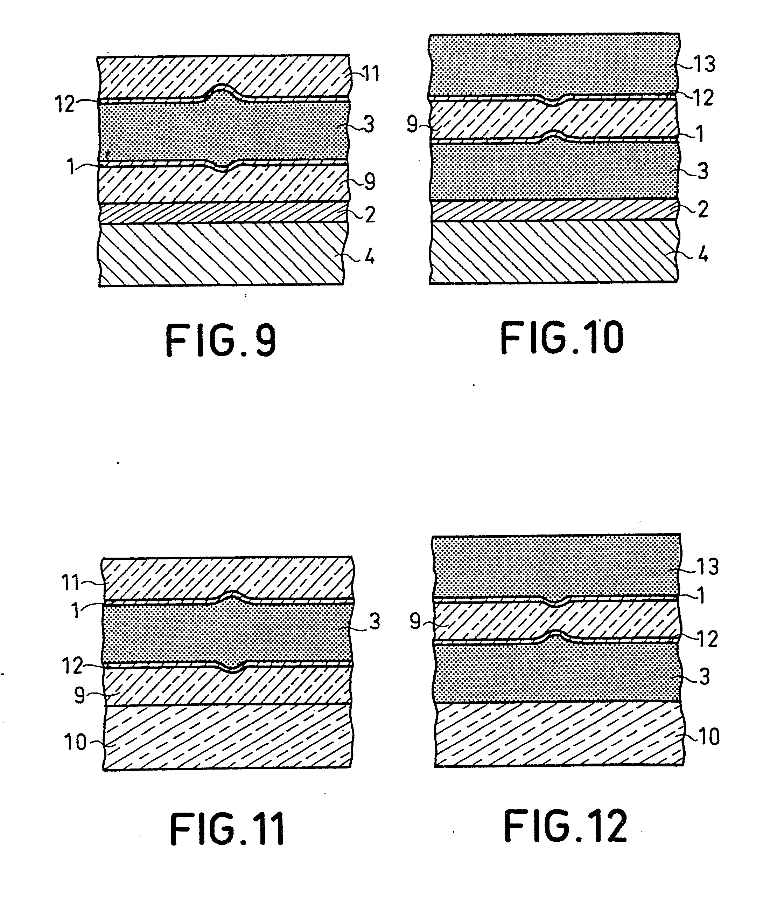

Sur la figure 9, on peut voir une structure qui est apparentée à celle de la figure 6 mais qui comporte au-dessus de la couche thermodéformante 3 une seconde couche métallique ductile 12 partiellement perméable au rayonnement inscripteur. Cette couche 12 peut le cas échéant être protégée par un revêtement transparent 11 de faible dureté. Une première cavité optique est délimitée par la couche 2 et la couche 1. Une seconde cavité optique est délimitée par les couches ductiles 1 et 12. Lorsque le support d'information est vierge, ces deux cavités optiques coopèrent pour abaisser le facteur de réflexion à la longueur d'onde du rayonnement optique inscripteur. L'action de la couche thermodéformante 3 est de déformer simultanément les couches ductiles 1 et 12 et par la même occasion de fournir l'autorégulation par le désaccord des deux cavités optiques.

Sur la figure 10, on a interverti l'ordre des dépôts de façon que la cavité délimitée par les deux couches ductiles 1 et 12 soit encadrée par deux couches thermodéformantes 3 et 13. Le sens des déformations est inversé puisque c'est la couche 9 qui s'affaisse sous la poussée des deux couches thermodéformantes 3 et 13.

Dans le cas des figures 9 et 10, l'une des couches ductiles 1 ou 12 peut être faite d'un métal permettant l'inscription par ablation. Les épaisseurs des couches diélectriques et métalliques sont choisies non seulement pour qu'il y ait antiréflexion mais aussi pour qu'environ la moitié de la puissance absorbée le soit dans chacune des couches métalliques 1 et 12. Il en résulte un certain nombre d'avantages ; tout d'abord si la couche métallique extérieur est ductile, une possibilité de duplication globale tel que décrit dans la demande de brevet EP-A-33 430. D'autre part, la capacité d'archivage de la structure est multipliée par deux. Enfin les défauts d'inscription qui pourraient résulter d'une dégradation prononcée de l'une ou l'autre des couches métalliques ont un effet moindre sur la lecture dans la mesure

6

où on lit simultanément l'information inscrite dans chacune des couches métalliques ductiles ou d'ablation. Le résultat final est un taux d'erreur moindre.

Les structures qui viennent d'être décrites présentent l'inconvénient de comporter jusqu'à six couches. Elles peuvent cependant être simplifiées dans la mesure ou on supprime la couche fortement réfléchissante et où on réalise des conditions antiréflexion en adaptant l'épaisseur de la couche diélectrique entre les couches métalliques déformable ou d'ablation. Cette structure présente en outre l'avantage de pouvoir être inscrite indifféremment de face, c'est-à-dire à travers la protection, ou à travers le substrat. Cependant, au cours de l'inscription la déformation du polymère constituant la couche diélectrique ne permet pas de modifier considérablement la réflectance de la structure dans la mesure où la réflectance de chaque couche métallique de stockage est relativement faible ($\simeq$ 40 %). Il en résulte que dans ce cas l'effet d'autorégulation de puissance est moindre que les structures précédemment décrites.

Sur la figure 11, la structure est apparentée à celle de la figure 9, mais on a substitué un substrat transparent 10 à l'ensemble 2-4. Sur la figure 12, la structure est apparentée à celle de la figure 10, mais l'ensemble 2-4 est remplacé par un substrat transparent 10.

La présente invention présente un grand intérêt pour les systèmes d'enregistrement-restitution de données utilisant la même longueur d'onde pour l'enregistrement et la lecture ce qui est la situation la plus courante. Dans ce cas, il est cependant nécessaire que les conditions d'antiréflexion de la structure avant inscription ne soient pas parfaitement satisfaites (c'est-à-dire que la réflexion du faisceau de lecture soit voisine de 10-20 %) afin qu'il soit possible de suivre la surface du disque à l'aide des dispositifs de focalisation couramment utilisés avec ces ensembles d'enregistrement-restitution de données. Il en résulte que la modification de la réflectance du système au cours de la destruction des conditions de quasi-antiréflexion par inscription de données est au maximum égale à 50-70 %. On peut encore utiliser un faisceau de lecture de caractéristiques optiques différentes du faisceau d'écriture et on choisit l'accord de la cavité optique pour qu'on ait une antiréflexion optimale pour la longueur d'onde du rayonnement d'écriture. Généralement, il en résulte simultanément une réflectance élevée pour la longueur d'onde du rayonnement de lecture. Dans ce cas, au cours de l'inscription, non seulement la réflectance peut atteindre 70-80 % (c'est-à-dire que l'effet d'autorégulation de puissance en temps réel est important), mais aussi il y a modification de la réflexion du faisceau de lecture (effet d'amplitude) qui se superpose à la diffraction de ce faisceau sur le relief de l'inscription. Il en résulte un contraste amélioré à la lecture, c'est-à-dire un bruit quantique plus faible avec les détecteurs utilisés. L'effet est maximum si l'épaisseur b est diélectrique contenu dans la cavité optique est :

$$b = (2 k + 1) (\lambda \text{ écriture}/4 n) = (N \lambda \text{ lecture}/2 n)$$

où k et N sont des nombres entiers.

Si $\lambda$ écriture = 0,83 $\mu$m et $\lambda$ lecture = 0,63 $\mu$m et n = 1,5, l'effet maximum sera obtenu pour R = 1 et N = 4, c'est-à-dire pour une épaisseur b de 400 nm.

## Revendications

1. Procédé thermo-optique d'inscription d'information sur un support comprenant une couche métallique ductile (1) associée à une couche (3) contiguë de substance organique thermo-déformante ; l'inscription mettant en œuvre un rayonnement de longueur d'onde prédéterminée échauffant en son point de convergence ladite couche métallique ductile qui communique sa chaleur à la substance organique, dont la déformation thermique locale entraîne une déformation plastique de la couche métallique ductile, mais sans rupture de celle-ci, caractérisé en ce que, ladite couche métallique ductile (1) étant partiellement perméable audit rayonnement, il consiste à munir le support d'information d'une couche métallique réfléchissante (2, 12) formant avec la couche métallique ductile (1) une cavité optique à faces parallèles et à accorder initialement avant inscription l'épaisseur (b) de ladite cavité optique aux environs d'un multiple impair du quart de la longueur d'onde du rayonnement d'inscription de façon que la réflexion (R) dudit rayonnement optique par ledit support augmente avec la déformation plastique locale (7) dans la couche métallique ductile lors de l'inscription.

2. Procédé selon la revendication 1, caractérisé en ce que ladite couche de substance organique thermo-déformante (3) est située à l'intérieur de ladite cavité optique.

3. Procédé selon la revendication 1, caractérisé en ce que la cavité optique est encadrée par deux couches (3, 13) de substance organique thermo-déformante ; la couche métallique réfléchissante (12) étant également une couche ductile partiellement perméable au rayonnement inscripteur.

4. Procédé selon la revendication 3, caractérisé en ce qu'il comprend en outre une seconde cavité optique couplée à ladite cavité optique ; cette seconde cavité optique étant délimitée par l'une des couches métalliques ductiles (1) et par une couche réfléchissante (2) ne transmettant pas le rayonnement inscripteur.

5. Procédé selon l'une quelconque des revendications 1 à 4, caractérisé en ce que la couche thermo-déformante (3, 13) est une couche faite d'un matériau thermo-dilatable.

6. Procédé selon l'une quelconque des revendications 1 à 4, caractérisé en ce que la couche thermo- déformante (3, 13) est une couche faite d'un matériau thermo-dégradable.

7. Support d'information inscriptible au moyen d'un rayonnement optique de longueur d'onde prédéterminée ; ledit support comprenant une couche métallique ductile (1, 12) associée à une couche contiguë de substance organique thermo-déformante (3, 13) ladite couche métallique ductile s'échauffant au point de convergence dudit rayonnement optique et communiquant sa chaleur à la substance organique, dont la déformation thermique locale entraîne une déformation plastique de la couche métallique ductile, mais sans rupture de celle-ci, caractérisé en ce que ladite couche métallique ductile (1) est partiellement perméable audit rayonnement et qu'une couche métallique réfléchissante (2, 11) formant avec la couche métallique ductile une cavité optique à faces parallèles est accordée initialement avant inscription en épaisseur aux environs d'un multiple impair du quart de la longueur d'onde du rayonnement d'inscription de façon que le facteur de réflexion dudit support à ladite longueur d'onde augmente avec la déformation plastique locale dans la couche métallique ductile lors de son inscription.

8. Support selon la revendication 7, caractérisé en ce que la couche métallique réfléchissante (11) est partiellement perméable audit rayonnement optique, ladite cavité optique étant couplée à une seconde cavité optique à faces parallèles délimitée par ladite couche métallique réfléchissante (1) et par une autre couche métallique réfléchissante (2) ne transmettant pas ledit rayonnement optique.

9. Support selon l'une quelconque des revendications 7 et 8, caractérisé en ce que la substance thermo-déformante (3) est située à l'intérieur de ladite cavité optique.

10. Support selon l'une quelconque des revendications 7 et 8, caractérisé en ce que la substance thermo-déformante (3, 13) encadre ladite cavité optique ; ladite cavité optique étant munie d'une couche transparente (9) capable de céder sous la poussée de ladite substance thermo-déformante (3, 13).

11. Support selon la revendication 8, caractérisé en ce que ladite cavité optique est accessible par ses deux faces (1, 12) audit rayonnement optique.

12. Support selon la revendication 8, caractérisé en ce que la couche métallique réfléchissante (2) coiffe les autres couches déposées sur le substrat (10) ; ledit substrat étant perméable au rayonnement optique.

13. Support selon l'une quelconque des revendications 7 à 12, caractérisé en ce que la substance thermo-déformante (3, 13) est une substance thermo-dilatable.

14. Support selon l'une quelconque des revendications 7 à 12, caractérisé en ce que la substance thermo-déformante (3, 13) est une substance thermo-dégradable.

15. Support selon l'une quelconque des revendications 7 à 12, caractérisé en ce que la substance thermo-déformante (3, 13) absorbe partiellement ledit rayonnement optique.

16. Support selon la revendication 8, caractérisé en ce que l'une des couches métalliques (1, 12) délimitant ladite cavité optique est une couche thermo-dégradable permettant l'inscription par ablation thermique.

17. Dispositif de lecture d'un support d'information inscriptible au moyen d'un rayonnement optique de longueur d'onde prédéterminée ; ledit support comprenant une couche métallique ductile (1, 12) associée à une couche contiguë de substance organique thermo-déformante (3, 13) ladite couche métallique ductile s'échauffant au point de convergence dudit rayonnement optique et communiquant sa chaleur à la substance organique, dont la déformation thermique locale entraîne une déformation plastique de la couche métallique ductile, mais sans rupture de celle-ci, caractérisé en ce que ladite couche métallique ductile (1) est partiellement perméable audit rayonnement, en ce qu'une couche métallique réfléchissante (2, 11) formant avec la couche métallique ductile une cavité optique à faces parallèles est accordée initialement avant inscription en épaisseur aux environs d'un multiple impair du quart de la longueur d'onde du rayonnement d'inscription de façon que le facteur de réflexion dudit support à ladite longueur d'onde augmente avec la déformation plastique locale dans la couche métallique ductile lors de son inscription et en ce que ladite cavité optique est en outre accordée de façon qu'à la longueur d'onde de lecture les zones du support non inscrites présentent une réflectance maximale ; la longueur d'onde de lecture étant différente de la longueur d'onde ayant servi à l'inscription de l'information.

**Claims**

1. A thermooptical method for recording informations on a carrier comprising a ductile metal layer (1) associated to a contiguous layer (3) of a thermodeforming organic substance, by use of a radiation of a predetermined wavelength which heats up at its convergence point said ductile metal layer, the latter communicating its heat to the organic substance, the local thermal deformation of which leads to a plastic deformation of the ductile metal layer without however cracking it, characterized in that said ductile metal layer (1) being partially pervious to said radiation, the method consists in providing on the information carrier a reflecting metal layer (2, 12) which constitutes in combination with the ductile metal layer (1) an optical cavity with parallel surfaces, and adapting initially prior to the recording operation the thickness (b) of said optical cavity to approximately an odd multiple of a quarter wavelength of the recording radiation in such a way, that the reflection (R) of said optical radiation from said carrier increases with the local plastic deformation (7) in the ductile metal layer during the recording operation.

2. A method according to claim 1, characterized in that said layer of thermodeforming organic substance (3) is situated inside said optical cavity.

3. A method according to claim 1, characterized in that the optical cavity is framed by two layers (3, 13) of a thermodeforming organic substance, the reflecting metal layer (12) being also a ductile layer which is partially pervious to the recording radiation.

4. A method according to claim 3, characterized in that it further comprises a second optical cavity which is coupled to said optical cavity and which is delimited by one of the ductile metal layers (1) and by a reflecting layer (2) which does not transmit the recording radiation.

5. A method according to any one of claims 1 to 4, characterized in that the thermodeforming layer (3, 13) is made of a thermoexpansible material.

6. A method according to any one of claims 1 to 4, characterized in that the thermodeforming layer (3) is made of a thermally decomposable material.

7. An information carrier on which information can be recorded by means of an optical radiation of a predetermined wavelength, said carrier comprising a ductile metal layer (1, 12) associated to a contiguous layer of an organic thermodeforming substance (3, 13), said ductile metal layer being heated up at the convergence point of said optical radiation and communicating its heat to the organic substance, the thermal deformation of which leads to a plastic deformation of the ductile metal layer without however cracking it, characterized in that said ductile metal layer (1) is partially pervious to said radiation and that the thickness of a reflecting metal layer (2, 1) which constitutes in combination with the ductile metal layer an optical cavity with parallel surfaces, is adapted initially, prior to the recording operation, to approximately an odd multiple of a quarter wavelength of the recording radiation in such a way that the reflection coefficient of said carrier at said wavelength increases with the local plastic deformation in the ductile metal layer during the recording operation.

8. A carrier according to claim 7, characterized in that the reflecting metal layer (1) is partially pervious to said optical radiation, said optical cavity being coupled to a second optical cavity having parallel surfaces and being delimited by said reflecting metal layer (1) and by another reflecting metal layer (2) which does not transmit said optical radiation.

9. A carrier according to any one of claims 7 and 8, characterized in that the thermodeforming substance (3) is situated inside said optical cavity.

10. A carrier according to any one of claims 7 and 8, characterized in that the thermodeforming substance (3, 13) frames said optical cavity, said optical cavity being provided with a transparent layer (9) which is capable to yield under the pressure exerted by said thermodeforming substance (3, 13).

11. A carrier according to claim 8, characterized in that said optical cavity is accessible to said optical radiation through its two surfaces (1, 12).

12. A carrier according to claim 8, characterized in that the reflecting metal layer (2) covers the other layers deposited on the substrate (10), said substrate being pervious to the optical radiation.

13. A carrier according to any one of the claims 7 to 12, characterized in that the thermodeforming substance (3, 13) is a thermally extensible substance.

14. A carrier according to any one of claims 7 to 12, characterized in that the thermodeforming substance (3, 13) is a thermally decomposable substance.

15. A carrier according to any one of the claims 7 to 12, characterized in that the thermodeforming substance (3, 13) partially absorbs said optical radiation.

16. A carrier according to claim 8, characterized in that one of the metal layers (1, 12) which borders said optical cavity is a thermally decomposable layer allowing the recording by thermal ablation.

17. A device for reading informations from a carrier on which informations can be recorded by means of an optical radiation of a predetermined wavelength, said carrier comprising a ductile metal layer (1, 12) associated to a contiguous layer of an organic thermodeforming substance (3, 13), said ductile metal layer being heated up at the convergence point of said optical radiation and communicating its heat to the organic substance, the thermal deformation of which leads to a plastic deformation of the ductile metal layer without however cracking it, characterized in that said ductile metal layer (1) is partially pervious to said radiation and that the thickness of a reflecting metal layer (2, 1) which constitutes in combination with the ductile metal layer an optical cavity with parallel surfaces, is adapted initially, prior to the recording operation, to approximately an odd multiple of a quarter wavelength of the recording radiation in such a way, that the reflection coefficient of said carrier at said wavelength increases with the local plastic deformation in the ductile metal layer during the recording operation, and that said optical cavity is further tuned in such a way that at the read wavelength, the idle carrier zones present a maximum reflection coefficient, the read wavelength differing from the wavelength which has been used to record the information.

## Ansprüche

1. Thermooptisches Verfahren zum Aufzeichnen von Informationen auf einem Träger, der eine duktile Metallschicht (1) und eine dieser zugeordnete und an diese angrenzende Schicht (3) aus einer unter Wärmeeinfluß verformbaren organischen Substanz enthält, wobei zur Aufzeichnung eine Strahlung

0 046 104

gegebener Wellenlänge verwendet wird, durch die in deren Konvergenzpunkt die duktile Metallschicht erwärmt wird, wobei diese Wärme an die organische Substanz weitergegeben wird, deren örtliche thermische Verformung zu einer plastischen Verformung der duktilen Metallschicht führt, ohne daß diese jedoch reißt, dadurch gekennzeichnet, daß die duktile Metallschicht (1) teilweise für diese Strahlung durchlässig ist und das Verfahren darin besteht, daß der Informationsträger mit einer reflektierenden Metallschicht (2, 12) versehen wird, die mit der duktilen Metallschicht (1) einen optischen Hohlraum mit parallelen Flächen bildet, und daß die Dicke (b) dieses optischen Hohlraums ursprünglich vor der Aufzeichnung in der Größenordnung eines ungeradzahligen Vielfachen der Viertelwellenlänge der Aufzeichnungsstrahlung gewählt wird, derart, daß die Reflexion (R) dieser optischen Strahlung an diesem Träger mit der örtlichen plastischen Verformung (7) in der duktilen Metallschicht bei der Aufzeichnung zunimmt.

2. Verfahren nach Anspruch 1, dadurch gekennzeichnet, daß die Schicht aus einer unter Wärmeeinfluß verformbaren organischen Substanz (3) im Inneren des optischen Hohlraums liegt.

3. Verfahren nach Anspruch 1, dadurch gekennzeichnet, daß der optische Hohlraum durch zwei Schichten (3, 13) aus einer unter Wärmeeinfluß verformbaren organischen Substanz eingerahmt ist, wobei die reflektierende Metallschicht (12) ebenfalls eine duktile Schicht ist, die teilweise für die Aufzeichnungsstrahlung durchlässig ist.

4. Verfahren nach Anspruch 3, dadurch gekennzeichnet, daß außerdem ein zweiter optischer Hohlraum vorgesehen ist, der mit dem ersten optischen Hohlraum gekoppelt ist und von einer der duktilen Metallschichten (1) und von einer reflektierenden Schicht (2), die die Aufzeichnungsstrahlung nicht durchläßt, begrenzt ist.

5. Verfahren nach einem beliebigen der Ansprüche 1 bis 4, dadurch gekennzeichnet, daß die unter Wärmeeinfluß verformbare Schicht (3, 13) eine Schicht aus einem unter Wärmeeinfluß sich ausdehnenden Material ist.

6. Verfahren nach einem beliebigen der Ansprüche 1 bis 4, dadurch gekennzeichnet, daß die unter Wärmeeinfluß verformbare Schicht (3, 13) eine Schicht aus einem sich unter Wärmeeinfluß zersetzenden Material ist.

7. Informationsträger, der mithilfe einer optischen Strahlung einer vorgegebenen Wellenlänge beschrieben werden kann und eine duktile Metallschicht (1, 12) sowie dieser zugeordnet und an diese angrenzend eine unter Wärmeeinfluß verformbare Schicht (3, 13) einer organischen Substanz aufweist, wobei die duktile Metallschicht sich im Konvergenzpunkt dieser optischen Strahlung erwärmt und ihre Wärme der organischen Substanz mitteilt, und wobei die örtliche thermische Verformung dieser Substanz eine plastische Verformung der duktilen Metallschicht bewirkt, ohne daß diese jedoch reißt, dadurch gekennzeichnet, daß die duktile Mettallschicht (1) teilweise für diese Strahlung durchlässig ist und daß eine reflektierende Metallschicht (2, 1) die mit der duktilen Metallschicht einen optischen Hohlraum mit parallelen Flächen bildet, ursprünglich vor der Aufzeichnung bezüglich der Dicke auf den Bereich eines ungeradzahligen Vielfachen der Viertelwellenlänge der Aufzeichnungsstrahlung abgestimmt ist, derart, daß der Reflektionsfaktor des Trägers bei dieser Wellenlänge mit der örtlichen plastischen Verformung in der duktilen Metallschicht während der Aufzeichnung zunimmt.

8. Träger nach Anspruch 7, dadurch gekennzeichnet, daß die reflektierende Metallschicht (1) für die optische Strahlung teilweise durchlässig ist, wobei der optische Hohlraum mit einem zweiten optischen Hohlraum gekoppelt ist, der parallele Flächen aufweist und von der reflektierenden Metallschicht (1) und einer weiteren reflektierenden Metallschicht (2), die die genannte optische Strahlung nicht durchläßt, begrenzt ist.

9. Träger nach einem beliebigen der Ansprüche 7 und 8, dadurch gekennzeichnet, daß die unter Wärmeeinfluß verformbare Substanz (3) sich im Inneren des optischen Hohlraums befindet.

10. Träger nach einem beliebigen der Ansprüche 7 und 8, dadurch gekennzeichnet, daß die unter Wärmeeinfluß verformbare Substanz (3, 13) den optischen Hohlraum einrahmt und daß der optische Hohlraum mit einer transparenten Schicht (9) versehen ist, die in der Lage ist, unter dem Druck der unter Wärmeeinfluß verformbaren Substanz (3, 13) nachzugeben.

11. Träger nach Anspruch 8, dadurch gekennzeichnet, daß der optische Hohlraum über seine beiden Flächen (1, 12) für die optische Strahlung zugänglich ist.

12. Träger nach Anspruch 8, dadurch gekennzeichnet, daß die reflektierende Metallschicht (2), die die anderen auf dem Substrat (10) aufgebrachten Schichten überdeckt, wobei das Substrat für die optische Strahlung durchlässig ist.

13. Träger nach einem beliebigen der Ansprüche 7 bis 12, dadurch gekennzeichnet, daß die unter Wärmeeinfluß verformbare Substanz (3, 13) eine unter Wärmeeinfluß sich ausdehnende Substanz ist.

14. Träger nach einem beliebigen der Ansprüche 7 bis 12, dadurch gekennzeichnet, daß die unter Wärmeeinfluß verformbare Substanz (3, 13) eine sich unter Wärmeeinfluß zersetzende Substanz ist.

15. Träger nach einem beliebigen der Ansprüche 7 bis 12, dadurch gekennzeichnet, daß die unter Wärmeeinfluß verformbare Substanz (3, 13) die optische Strahlung teilweise absorbiert.

16. Träger nach Anspruch 8, dadurch gekennzeichnet, daß eine der Mettallschichten (1, 12), die den optischen Hohlraum begrenzt, eine sich unter Wärmeeinfluß zersetzende Schicht ist, in der die Aufzeichnung durch Wärmeabnahme ermöglicht wird.

17. Vorrichtung zum Lesen eines Informationsträgers, der mithilfe einer optischen Strahlung einer vorgegebenen Wellenlänge beschrieben werden kann und eine duktile Metallschicht (1, 12) und eine dieser zugeordnete und an diese angrezende Schicht (3, 13) aus einer unter Wärmeeinfluß verformbaren organischen Substanz enthält, wobei die duktile Metallschicht sich im Konvergenzpunkt der optischen Strahlung erwärmt und ihre Wärme der organischen Substanz übermittelt, deren örtliche thermische Verformung eine plastische Verformung der duktilen Metallschicht nach sich zieht, ohne daß jedoch diese reißt, dadurch gekennzeichnet, daß die duktile Metallschicht (1) teilweise für die Strahlung durchlässig ist, daß eine reflektierende Metallschicht (2, 1) die mit der duktilen Metallschicht einen optischen Hohlraum mit parallelen Flächen bildet, ursprünglich vor der Aufzeichnung in ihrer Dicke auf den Bereich eines ungeradzahligen Vielfachen einer Viertelwellenlänge der Aufzeichnungsstrahlung abgestimmt wird, derart, daß der Reflektionsfaktor des Trägers bei der genannten Wellenlänge mit der örtlichen plastischen Verformung in der duktilen Metallschicht während der Aufzeichnung zunimmt, und daß der optische Hohlraum außerdem so abgestimmt ist, daß bei der Lesewellenlänge die nicht beschriebenen Zonen des Trägers einen Höchstwert des Reflektionsfaktors besitzen, wobei die Leswellenlänge sich von der Wellenlänge unterscheidet, die der Aufzeichnung der Information gedient hat.

FIG.1

FIG.2

FIG. 3

FIG. 4

FIG. 5

FIG. 6

FIG. 7

FIG. 8

4

FIG.9

FIG.10

FIG.11

FIG.12